# EUROPEAN PATENT APPLICATION

(11) **EP 0 999 024 A1**
(43) Date of publication of application: **10.05.2000**
(21) Application number: 98309133.1
(22) Date of filing: 06.11.1998
(51) Int. Cl.: B29C 43/06, B29C 33/36, B29C 33/30

(54) **Improvements in and relating to compression moulding**

(71) Applicant: Whiteley, Christopher James, Enstone, Oxfordshire 0X7 4NP (GB)
(72) Inventor: Whiteley, Christopher James, Enstone, Oxfordshire 0X7 4NP (GB)
(74) Representative: Higgins, Michael Roger

(57) **Abstract**

A method of compression moulding of hot plastics material includes the steps of extruding a charge of plastics material into one of a plurality of lower mould halves (8) at a position remote from a press (1), transporting the lower mould half and charge of plastics material to the press and connecting it to engagement means (9) on the press which aligns the lower mould axially with a complementary upper mould (5) secured for axial movement to the press such that the lower mould is restrained from horizontal or vertical movement, pressing the upper and lower moulds together to form a moulding from the charge, retracting the upper mould to expose the upper part of the moulding, disengaging the lower mould from the engagement means and withdrawing it from the press for subsequent cooling and removal of the moulding from the lower mould at a position remote therefrom, charging a second lower mould (8) with a charge of plastics material and introducing the second lower mould into the moulding press after the first lower mould has been removed therefrom to produce another moulding. The method therefore permits mouldable lower mould halves to be also used to transport the raw charge of plastics material from the extruder to the press and thereafter the moulding from the press to a cooling station until sufficiently cooled to be removed therefrom, thereby maximising the use of the press and simplifying the handling of the plastics material before and after moulding. To facilitate this objective the moulding press and lower mould halves are modified to include cooperable engagement means preventing horizontal or vertical movement of each lower mould half relative to the upper mould half but by which each lower mould half may be easily inserted or removed from the press before and after moulding. In a further refinement the lower mould halves are made of a lightweight material such as aluminium and are supported against buckling on the press during moulding by a support bolster (4,7).

## Description

This invention relates to compression moulding, particularly but not exclusively to compression moulding of hot plastics material.

Compression moulding of plastics, particularly where the object to be moulded is relatively large and heavy, often requires a considerable amount of man-handling before and after the moulding operation. In a typical operation the mould is in two halves which are separated horizontally, with one of the moulds being moveable vertically on a platen to allow hot plastics material to be introduced prior to moulding and, after moulding, in order to remove the moulded product. A known improvement of this general arrangement comprises moulding apparatus in which the lower half of the mould is mounted on a sliding platen so that when the upper half of the mould is opened vertically the lower mould can be moved out of axial alignment with it to allow for easier filling of plastics material and/or removal of a moulded object. However, this moulding process is still relatively cumbersome and time consuming, particularly where the moulded product has to be cooled sufficiently in order for it to be removed from the lower mould, thereby delaying the moulding of another product.

It is an object of the invention to provide a method of moulding plastics and similar materials wherein the aforementioned disadvantages are obviated.

According to a first aspect of the invention there is provided a method of moulding plastics materials with the use of a compression moulding press, the method including the steps of putting a charge of plastics material into one of a plurality of lower mould halves remote from the press, transporting the lower mould to the press and connecting it to engagement means on the press so as to align the lower mould axially with a complementary upper mould secured to the press, pressing the mould halves together to form a moulding from the charge, opening the mould to expose the upper part of the moulding, disengaging the lower mould from the engagement means and withdrawing it from the press for subsequent cooling and removal of the moulding from the first lower mould at a position remote therefrom, charging a second lower mould with a charge of plastics material and introducing said second lower mould into the moulding press and connecting it to the engagement means after the first lower mould has been removed therefrom to produce another moulding.

With this arrangement, each lower moulding can be used to transport the plastics material from the plastics extruder direct to the moulding press on any convenient surface, such as a roller table, whereafter the lower half of the mould can be simply slid or rolled into position and retained by the retaining means. After the moulding process is complete the lower half of the mould is removed from the press and then slid or rolled to a remote station to allow for cooling and subsequent removal of the moulding from the mould. The method according to the invention therefore maximises the use of the moulding press without the need otherwise to wait for the moulding to cool sufficiently to be man-handled, and the handling process itself can be minimised, particularly if all of the operations are performed with the use of a sliding table or roller table, or some such similarly convenient surface.

Preferably, each lower mould also includes formations which permit the mould once the moulding is sufficiently cool, to be inverted so that the moulding may be removed either manually and/or with the aid of gravity.

According to a second aspect of the invention there is provided compression moulding apparatus comprising a compression moulding press, a first mould half and a plurality of second mould halves, each being cooperable with the first mould half to form a moulded product when the two halves are pressed together by the press, and engagement means on the press adapted to engage in sequence each such second mould half so as to align it with the first mould half whilst being restrained from horizontal or vertical movement relative to the engagement means such that either or both mould halves may be pressed towards the other by the press to produce a moulded product.

Conveniently, the engagement means may be in the form of pneumatically operated movable projections on the press which are receivable in correspondingly shaped recesses or holes in each second mould half. Where the shape of the moulded product permits, the projections may also extend into the cavity defined by the two mould halves when pressed together to retain the moulding in the second mould when the first mould half is moved away relative to the second mould half after pressing. In this way each second mould half may be restrained from movement on its platen within the press until the first mould half has been moved axially away therefrom and the projections thereafter withdrawn from the second mould half, and also the moulding where applicable, to permit withdrawal of the second mould half from the press.

In a further aspect of the invention, each second mould half is made of a lightweight material such as aluminium and consequential distortion which could otherwise be caused by the pressing together of each mould half during moulding of a product is resisted by a support bolster on the platen shaped to closely match the exterior surfaces of each second mould. The support bolster may be integral with the platen or may comprise a fixed outer bolster structure with planar surfaces and a removable intermediate bolster with an inner surface of shape closely matching the external shape of each second mould half and an external planar shape closely matching that of the fixed outer bolster. This latter arrangement permits the use of slightly differently shaped or sized intermediate bolsters intended to reflect differences between different sets of the second moulds which may be needed to accommodate different thicknesses of finished mouldings or specific custom requirements such as logo's required on some but not all such mouldings but where the first mould is of standard size and shape. In turn, this reduces or eliminates the press downtime which would otherwise be necessary if an entire support bolster had to be removed from the press and replaced by a similar but not identical one so as to accommodate a custom lower mould having only small differences to the standard one.

The invention in both its aspects will now be described by way of example only with reference to the accompanying drawings in which:
Figure 1 is a perspective view of moulding apparatus according to the invention, only part of which is shown for clarity, and
Figure 2 is a schematic block plan view of the method of the invention.

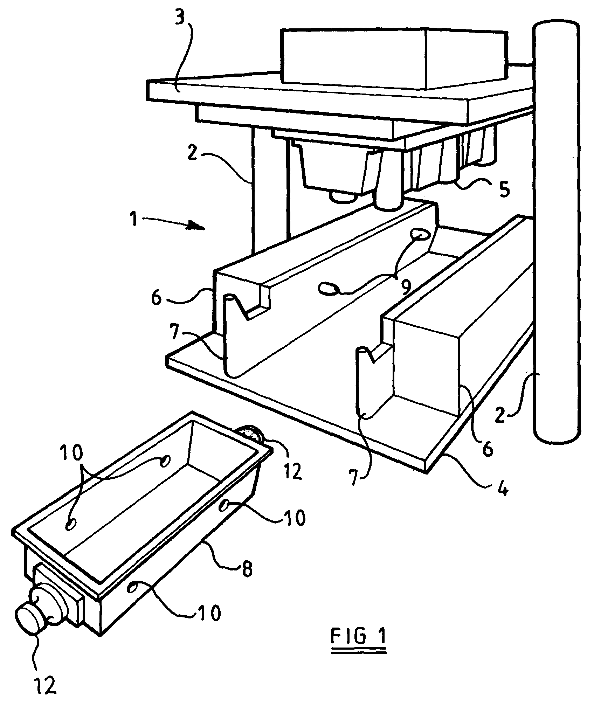

Referring firstly to Figure 1 there is shown the operational part of a conventional downstroke compression moulding press shown generally at 1 which includes cylindrical guide pillars 2 (only two of which are shown), an upper platen 3 guidingly received by the pillars 2 and a lower platen 4 secured against movement on the lower portion of the press. Secured to and depending from the upper platen 3 is an upper mould 5 having an external shape intended to represent the required internal shape of a product to be moulded. However, it will be understood to those skilled in the art that this general arrangement could be replaced by a conventional upstroke press in which the upper platen and mould half are secured against movement and the lower platen and mould half is instead moveable upwardly.

On the lower platen 4 are a pair of oppositely disposed support blocks 6 onto each of which are secured inwardly facing support plates 7 which, together with the central portion of the lower platen 4 define a channel for receiving a correspondingly shaped lower mould half 8 generally in the form of a rectangular tray.

Extending inwardly through each support plate 7 are a pair of pneumatically operable engagement pins 9 (shown extended) which, in use, are extended to the position shown such that they are received in correspondingly shaped recesses or holes 10 on opposing side walls of the lower mould 8 to thereby releaseably secure the latter in position.

For the sake of clarity only, the interior of the lower mould 8 is shown smooth although in most instances the topography of the interior would be more intricate, corresponding to the requirements of the product to be moulded.

In use, a charge of hot plastics material (not shown) is inserted into the lower mould 8 which is then slid into the support bolster defined by the support plates 7 and the central part of the upper surface of the lower platen 4, whereafler the pins 9 are moved axially inwardly so that they enter the holes 10 in the lower mould 8, thereby securing it against horizontal or verticle movement relative to the press. As a consequence, vertically downward movement of the upper mould 5 allows a moulding to be made, whereafter vertically upward movement of the upper mould 5 leaves the lower mould secured in place by the pins 9.

Where the shape of the moulding permits, the pins 9 may optionally be inserted into the cavity defined by the upper and the lower mould halves when pressed together so that when the plastics material is moulded the pins 9 also help to restrain the moulding itself from upward movement when the upper mould 5 is returned to the position shown in the drawing.

With the apparatus thus far described it will be apparent that because the lower mould 8 is supported on three sides by the support plates 7 and part of the lower platen 4 while the moulding process takes place they act in combination as a support bolster such that the downward pressure from the upper mould half 5 is effectively transferred thereto and, as a consequence, the lower mould half 8 can be made of a lightweight material such as aluminium. This, in turn, permits each lower mould half 8 to also be used as a tray which may be readily handled in accordance with the method described hereafter.

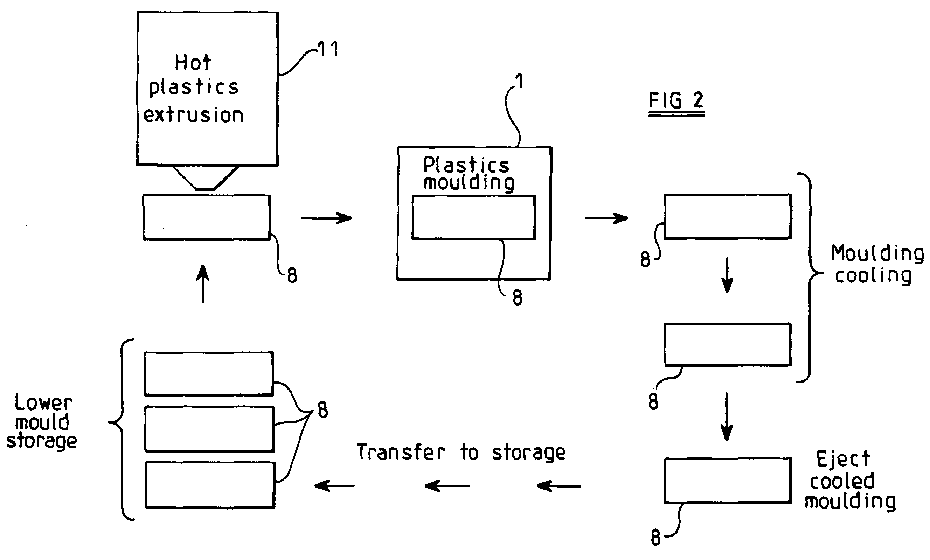

Turning now to Figure 2 there is shown a schematic block plan view of a method of moulding plastics materials with the use of compression moulding apparatus of the type described in Figure 1. In the drawing a conventional screw-driven plastics extruder 11 is shown at a station remote from moulding press 1 and a plurality of lower mould halves 8 are shown at various positions. In accordance with the method of the invention described in this embodiment a lower mould half is placed adjacent the plastics extruder 11 and a charge of hot plastics material is inserted. The mould half 8 can then be rolled or slid along a flat bed or similarly convenient means of transport to the moulding press 1 to produce a moulded product. Immediately after the moulding process the mould half 8 can then be moved out of the moulding press 1 and allowed to cool sufficiently for the moulded product to be ejected therefrom, whereafter the lower mould 8 is returned to a storage position. During this sequence additional lower moulds 8 can be filled and products moulded as required without having to wait for one moulded product to cool sufficiently for it to be removed from the lower mould half 8 before another product can be moulded by the moulding press 1.

As shown in Figure 1, each lower mould half 8 may be in the form of a tray in which case it may include projections, handles and similar formations enabling it to be manhandled as desired or even connected to automatic or semi-automatic mechanical handling apparatus. To facilitate this, each end of each lower mould half 8 is provided with a flanged projection 12 which can be gripped, and, as will be apparent, opposing pairs of projections 12 can be placed upon a pair of spaced apart tubular supports (not shown) whereafter each lower mould half (8) can be rolled over or inverted to permit a moulding to be ejected from the mould once it has cooled.

Accordingly, the invention in its two aspects provides a means of moulding relatively large objects and handling them with relative ease as compared to conventional apparatus and methods of the type described in the preamble hereto.

## Claims

1. A method of moulding plastics materials with the use of a compression moulding press (1), the method including the steps of putting a charge of plastics material into one of a plurality of lower mould halves (8) remote from the press, transporting the lower mould to the press and connecting it to engagement means (9) on the press so as to align the lower mould axially with a complementary upper mould (5) secured to the press, pressing the mould halves (5,8) together to form a moulding from the charge, opening the mould to expose the upper part of the moulding, disengaging the lower mould from the engagement means and withdrawing it from the press for subsequent cooling and removal of the moulding from the first lower mould at a position remote therefrom, charging a second lower mould (8) with a charge of plastics material and introducing said second lower mould into the moulding press and connecting it to the engagement means after the first lower mould has been removed therefrom to produce another moulding.

2. A method according to claim 1 in which the engagement means comprises a plurality of pins (9) cooperable with correspondingly shaped holes (10) or recesses in each lower mould, the pins being movable from a retracted position allowing insertion and removal of each such lower mould from the press, and an extended position in which the pins are received in complementary recesses or holes in each such lower moulding to thereby prevent horizontal or vertical movement thereof.

3. A method according to claim 2 in which the pins are further moved into the cavity defined by the upper mould and each such lower mould such that when a moulding is formed and the upper mould retracted to expose the upper part of the moulding, the moulding is restrained from upward movement with the upper mould, whereafter the engagement means in the form of pins are fully retracted to allow removal of the lower mould and, subsequently, the moulding.

4. A method according to any preceding claim in which each lower mould also includes formations (12) which permit the mould, once the moulding is sufficiently cool, to be inverted so that the moulding may be removed either manually and/or by gravity.

5. A method according to any preceding claim further comprising or including the steps of providing a support bolster on the press for supporting each lower mould half such that each lower mould half can be made from a relatively lightweight material.

6. Compression moulding apparatus comprising a compression moulding press, a first mould half and a plurality of second mould halves, each being cooperable with the first mould half to form a moulded product when the two halves are pressed together by the press, and engagement means on the press adapted to engage in sequence each such second mould half so as to align it with the first mould half whilst being restrained from horizontal or vertical movement relative to the engagement means such that either or both mould halves may be pressed towards the other by the press to produce a moulded product.

7. Apparatus according to claim 5 in which the engagement means are in the form of movable projections on the press which are receivable in correspondingly shaped recesses in each second mould half to prevent horizontal or vertical movement thereof.

8. Apparatus according to claim 6 wherein the movable projections also serve to retain the moulding in the second mould when the first mould half is moved away from the second mould after pressing.

9. Apparatus according to any preceding claim wherein the press includes a support bolster for each lower mould half.

10. Apparatus according to claim 8 in which the support bolster is releasably securable to the press and has an internal shape corresponding to the external shape of the second mould halves to thereby support each when mounted on the press for moulding.

11. Compression moulding apparatus comprising a compression moulding press (1), a first mould half (5) and a plurality of second mould halves (8), each being cooperable with the first mould half to form a moulded product when two halves (5),(8) are pressed together by the press, engagement means (9) on the press adapted to engage in sequence each such second mould half so as to align it with the first mould half whilst being restrained from horizontal or vertical movement relative to the engagement means such that either or both mould halves may be pressed towards the other by the press to produce a moulded product, characterised in that in the press comprises or includes a support bolster (4),(7) for each lower mould half which can thereby be made of a lightweight material.

12. Compression moulding apparatus according to Claim 11 further characterised in that the support bolster comprises or includes a plurality of detachable support plates (7) for supporting respective sides of each lower mould half (8).
